# EUROPÄISCHE PATENTSCHRIFT

(11) **EP 1 713 366 B1**
(45) Veröffentlichungstag und Bekanntmachung des Hinweises auf die Patenterteilung: **16.04.2008**
(21) Anmeldenummer: 05707089.8
(22) Anmeldetag: 31.01.2005
(51) Int. Cl.: A47K 3/34

(54) **DUSCHABTRENNUNG**
SHOWER PARTITION
PAROI DE DOUCHE

(30) Priorität: 05.02.2004 DE 102004005897
(43) Veröffentlichungstag der Anmeldung: 25.10.2006
(73) Patentinhaber: DORMA GMBH & CO. KG, 58256 Ennepetal (DE)
(72) Erfinder: GINZEL, Lothar, 58239 Schwerte (DE); BASSISTA, Kurt, 38100 Braunschweig (DE); WULFF, Dieter, 56651 Niederdürenbach (DE)
(86) Internationale Anmeldenummer: PCT/EP2005/000915
(87) Internationale Veröffentlichungsnummer: WO 2005/074775

(56) Entgegenhaltungen:
- EP-A- 1 147 758
- US-A1- 2004 003 459

## Beschreibung

Die Erfindung betrifft eine Duschabtrennung, bestehend aus wenigstens einem plattenförmigen Element, das ein Leuchtmittel aufweist, gemäß dem Oberbegriff des Patentanspruches 1 und ein Verfahren zur Kontaktlosen Energieübertragung für ein solches Leuchtmittel gemäß den Merkmalen des Anspruches 3.

Duschabtrennungen der vorstehend genannten Art sind hinlänglich bekannt. Sie bestehen in aller Regel aus mehreren plattenförmigen Elementen, die zusammengesetzt eine geschlossene Duschkabine ergeben. Dabei sind an den Stirnkanten der plattenförmigen Elemente Profile vorgesehen, die teilweise mit Dichtungen versehen sind und den Übergang zu einem angrenzenden Element bilden. Die Elemente bestehen beispielsweise aus Glas oder Kunststoff.

In der US2004/0003459 wird eine Duschabtrennung beschrieben, bei denen an den Seitenwänden Leuchtmittel angeordnet sein können. Die Versorgung der Leuchtmittel kann netzunabhängig durch einen Akku erfolgen.

Die EP 1147758 beschreibt die kontaktlose Energieübertragung über zwei Induktionsspulen auf ein Leuchtmittel oder einen sonstigen elektrischen Verbraucher

Eine Vorrichtung zur berührungslosen Übertragung elektrischer Energie mittels einer Induktionsspule, die in eine weitere von der ersten Spule getrennte Spule die Spannung überträgt, wird in der DE 197 26 840 A1 beschrieben.

Die Aufgabe der Erfindung besteht darin, ein Leuchtmittel, welches sich an oder innerhalb einer Duschabtrennung befindet, mit elektrischer Energie zu versorgen, wobei die Leuchtmittel autark betrieben werden sollen und keiner besonderen Wartung bedarf. Zudem soll die Energieversorgung unsichtbar erfolgen.

Gelöst wird diese Aufgabe durch die im Patentanspruch 1 und Patentanspruch 3 angegebenen Merkmale. Weitere Ausgestaltungen des erfindungsgemäßen Gegenstandes ergeben sich aus den Unteransprüchen.

Als Lösung wird vorgeschlagen, den Akku innerhalb der die einzelnen Scheiben einer Duschabtrennung umgebenden Elemente d.h. in den Profilen bzw. Dichtungen, eingesetzt werden. Es gibt heute Akkus, die wartungsfrei arbeiten, sehr klein sind und doch eine große Leistung haben.

Durch eine solche Verwendung eines Akkus kann z. B. auf die teure Energieübertragung über Bänder bzw. Schleifkontakte verzichtet werden, da diese im Laufe der Zeit durch Korrosion in ihrer Funktion beeinträchtigt sind.

So wird vorgeschlagen, dass die Energieübertragung, insbesondere für die Ladung des Akkus, mittels kontaktloser Induktion erfolgen soll. So ist es möglich, einen völlig autarken bewegbaren Türflügel mit einer entsprechenden Energieversorgung und damit auch autarken Energiebereitstellung auszuführen.

Durch die Energieübertragung vom einer Senderseite auf eine Empfängerseite eines Induktionskreises, in dem die Energie benötigt wird, wird zugleich eine preiswerte Lösung vorgeschlagen und darüber hinaus ist diese Lösung auch sicher gegen Wasser, wenn eine entsprechende Einbettung der Spulen bzw. der elektrischen Elemente in einer Vergussmasse vorgenommen wird.

Zur kontaktlosen Energieübertragung wird deshalb eine Energieübertragung mittels Induktivitäten sowohl auf der Senderseite als auch auf der Empfängerseite vorgeschlagen. Bei den Induktivitäten handelt es sich um zwei Spulen, die als Resonanzkreise konzipiert sind. Ein Oszillator erzeugt eine entsprechende Spannung, die in einem nachgeschalteten Verstärker verstärkt wird. Diese Spannung geht an einen Resonanzkreis auf der Senderseite. Von der dort verwendeten Induktivität wird eine Teilspannung abgezweigt und einem Phasenregelkreis zugeführt. Der Phasenregelkreis hat die Aufgabe, die durch die lose Koppelung entstehenden Koppeleffekte auszugleichen. Die Koppeleffekte entstehen dadurch, dass zwischen dem Resonanzkreis der Senderseite und dem Resonanzkreis der Empfängerseite kein fester Abstand besteht. Dieses z. B. resultiert daraus, dass zwischen dem Seitenteil der Duschabtrennung und der Tür ein Luftspalt vorhanden ist, der bei Türen unterschiedlich ist. Um hier eine weitestgehende Kompensation zu erreichen, wird deshalb vorgeschlagen, einen Phasenregelkreis einzusetzen. Der Phasenregelkreis vergleicht dabei die Phasenlage des Oszillators mit der von der Induktivität der Senderseite abgenommenen Phasenlage dieser Teilspannung. Die sich hieraus ergebende Regelspannung wird dem Oszillator zugeführt, der dadurch eine Nachstimmung automatisch durchführt. Somit können senderseitige StreuInduktivitäten kompensiert werden. Es sei darauf hingewiesen, dass die Koppelung variabel ist.

Auf der Empfängerseite befindet sich ebenfalls ein Resonanzkreis, der die induzierte Spannung über einen Gleichrichter einer Konstantstromquelle zuführt. Die Konstantstromquelle wiederum versorgt einen Akku, der zur Versorgung der Beleuchtung innerhalb der Duschabtrennung dient.

Bei den Spulen innerhalb der auf der Sender- und Empfängerseite verwendeten Resonanzkreise kann es sich um Luftspulen handeln oder aber auch um Spulen, die einen Ferritkern aufweisen.

Bei einer geöffneten Tür wird aufgrund des zu großen Luftspaltes zwischen der Empfänger- und der Senderseite keine Energie übertragen. Um jedoch eine funktionstüchtige Einrichtung, wie z. B. eine Beleuchtung innerhalb der Tür, vorzuhalten, wird die Versorgung in diesem Falle dann über einen durch die Energieübertragung gepufferten Akku aufrechterhalten.

Dadurch, dass innerhalb von Profilen Leuchtmittel vorgesehen sind, ergeben sich optische Effekte, welche die großflächigen Elemente einer Duschabtrennung beleben und eine bessere Anpassung an unterschiedliche Raumsituationen ermöglichen.

Um das Leuchtmittel und den Akku vor äußeren Beeinträchtigungen, wie Wasser, Feuchtigkeit usw., zu schützen, weist gemäß einer vorteilhaften Weiterbildung das Profil einen Hohlraum auf, in dem das vorzugsweise als LED ausgebildete Leuchtmittel angeordnet ist. Anstelle einer LED kann auch ein anderes, vorzugsweise einen geringen Energieverbrauch aufweisendes Leuchtmittel verwendet werden.

Der Schutz der Leuchtmittel und des Akkus vor äußeren Einflüssen kann noch weiter verbessert werden, wenn in vorteilhafter Weiterbildung der Hohlraum mit einer Vergussmasse zumindest teilweise ausgefüllt ist. Dies verhindert sicher und zuverlässig das Eindringen von Feuchtigkeit und damit eine Beschädigung der Leuchtmittel oder gar eine Gefährdung der Benutzer.

Um eine optisch unauffällige Stromzuleitung zu den Leuchtmitteln eines Elementes zu gewährleisten, ist in vorteilhafter Weiterbildung vorgesehen, dass die plattenförmigen Elemente vorzugsweise an ihrer Unterseite mit einer unteren Dichtung versehen sind, in der die Kabel der Stromzuführung für die LED's der Akku und die Energieübertragungsspule untergebracht sind.

Die Unterbringung der Kabel des Akkus und der Energieübertragungsspule in der unteren Dichtung kann auf zwei Arten erfolgen. Nach einer ersten Variante sind diese Komponenten in die untere Dichtung eingegossen. Nach einer alternativen Ausführungsform ist in der unteren Dichtung ein Raum zur Aufnahme der vorgenannten Komponenten vorgesehen. In beiden Fällen wird nicht nur eine nahezu unsichtbare Stromzuführung erreicht, sondern die Stromzuführung ist auch sicher vor äußeren Einflüssen untergebracht.

Die sichere Energieübertragung zwischen zwei benachbarten Spulen kann durch eine innerhalb oder unterhalb der Duschtasse befindliche Spule realisiert werden. Diese Spule wird mit der entsprechenden elektrischen Energie über ein Kabel versorgt. Die Übertragung der Energie von der Senderseite auf die Empfängerseite wird durch induktive Koppelung erreicht. Dabei kann die Spule innerhalb eines Profiles, in dem auch das Leuchtmittel enthalten sein kann, eingebettet sein.

Um zumindest für einen begrenzten Zeitraum auch eine geöffnete Tür, sei es eine Schiebetür oder Drehflügeltür, einer Duschabtrennung mit entsprechender Energie zu versorgen, kann innerhalb dieses Flügels der Akku innerhalb eines Profiles eingesetzt werden. Der Akku würde dann von der vorbeschriebenen Energieversorgungseinheit während der geschlossenen Tür mit entsprechender Energie gepuffert.

Weitere Einzelheiten, Merkmale und Vorteile der Erfindung ergeben sich aus nachfolgender Beschreibung bevorzugter Ausführungsbeispiele anhand von schematisch dargestellten Zeichnungen.

Es zeigen:
- Figur 1:: Eine Gesamtansicht einer erfindungsgemäßen Duschabtrennung,
- Figur 2:: eine Schnittdarstellung eines Dichtungsprofiles oberhalb einer Duschtasse mit integriertem Leuchtmittel und Stromversorgung,
- Figur 3:: wie Figur 2, jedoch ohne Leuchtmittel,
- Figur 4:: eine erste Ausführung einer Energieübertragung mit Luftinduktivitäten,
- Figur 5:: eine zweite Ausführung einer Energieübertragung mit Induktivitäten, die einen Ferritkern beinhalten.

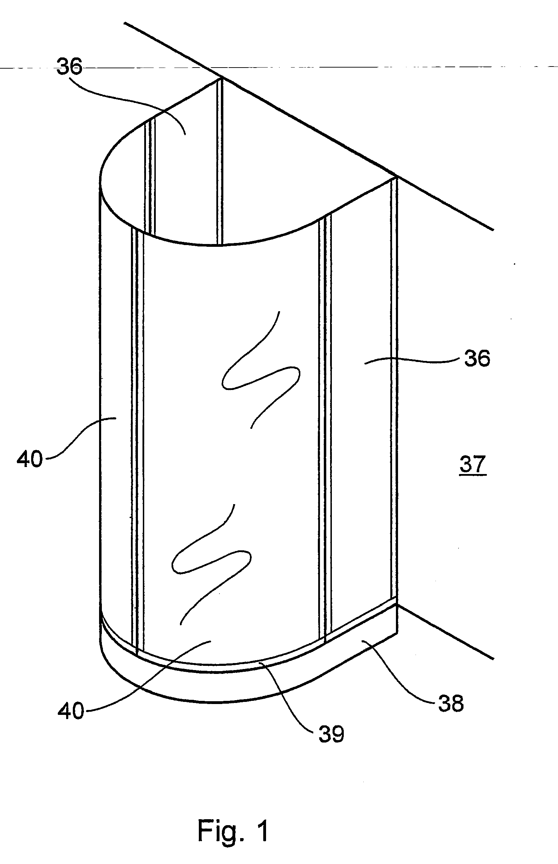

Die Figur 1 zeigt exemplarisch eine Duschabtrennung, die auf einer Duschtasse 38 angeordnet ist. Die Duschabtrennung besteht hierbei aus mehreren plattenförmigen Elementen 36 und 40, die - wie dargestellt - teils eben, teils gebogen ausgebildet sind oder aber auch nur gebogen bzw. nur eben ausgebildet sein können. Die plattenförmigen Elemente 36, 40 weisen zumindest ein feststehendes, an einer Wand 37 befestigtes Seitenteil 36 und zumindest einen verschwenkbaren Flügel 40 auf. Statt eines verschwenkbaren Flügels kann auch ein verschiebbarer Flügel vorgesehen sein.

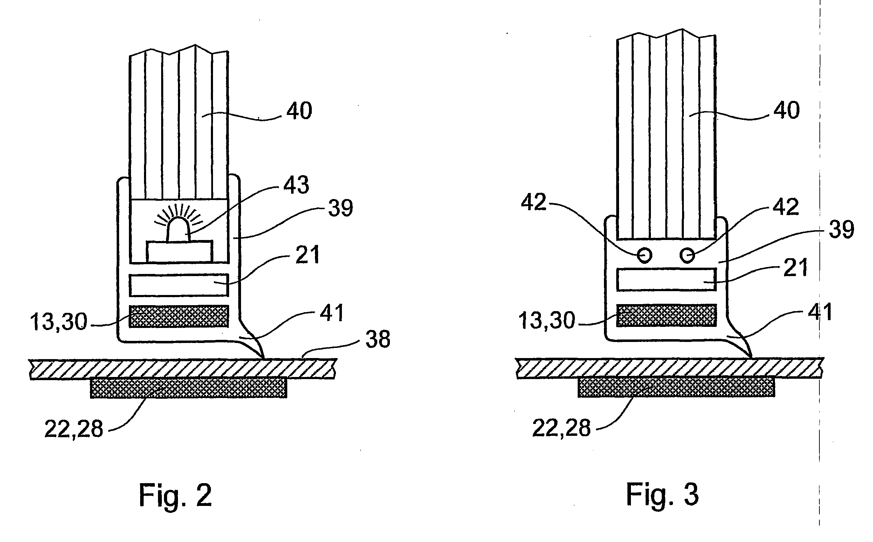

In der Figur 2 wird ausschnittsweise ein Bereich der Duschtasse 38 wiedergegeben. Oberhalb der Duschtasse ist der verschwenkbare Flügel 40 mit einem sich im unteren Bereich anschließenden Profil 39 wiedergegeben. Innerhalb des Profiles 39, das vor der unteren Stirnkante des schwenkbaren Flügels 40 montiert ist, befindet sich ein Leuchtmittel in Form einer LED, z. B. zur Beleuchtung der Glasscheibe des verschwenkbaren Flügels 40. Ferner befindet sich in dem Profil 39, eingebettet und damit wasserdicht abgeschlossen, ein Akku 21. Der Akku 21 wird über eine Spule 13, 30, die sich ebenfalls in den Profilen 39 befindet, geladen bzw. die Spule 13, 30 gibt ihre Energie direkt an die Beleuchtungseinrichtung 43 ab.

Damit der Akku 21 geladen und das Beleuchtungsmittel 43 mit der entsprechenden Energie auch beim Ausfall des Akkus versorgt werden kann, ist in einer bestimmten Stellung, vorzugsweise der geschlossenen Stellung der Türflügel, unterhalb der Duschtasse 38 eine zweite Spule 22, 28 platziert. Die Energiezufuhr für die Spulen 22, 28 ist nicht dargestellt. Befinden sich die Spulen 13, 30 oberhalb der Spulen 22, 28 wird automatisch durch eine induktive Koppelung die Energie von den Spulen 22, 28 auf die Spulen 13, 30 übertragen. Die Energieübertragung erfolgt dabei über einen Luftspalt L. Wie die Energie im Einzelnen mit einem Resonanzkreis übertragen wird, wird nachfolgend noch näher beschrieben.

In einer zweiten Ausführungsform der Figur 3 ist ebenfalls unterhalb des Flügels 40 das Profil 39 angebracht. Im Gegensatz zu der Ausführung der Figur 2 weist dieses Ausführungsbeispiel keine Leuchtmittel 43 auf. Vielmehr ist hier dargestellt, wie innerhalb des Profiles 39 auch Kabel zur Stromversorgung zum einen für den Akku 21 über die Spulen 13, 30 und damit auch gleichzeitig weite an die Beleuchtungsmittel 43 ausgeführt werden kann.

Der Akku 21 wird also immer dann mit elektrischer Energie geladen, wenn die Position der Spulen 13, 30 zu den Spulen 22, 28 in einem nahen Bereich gegeben ist.

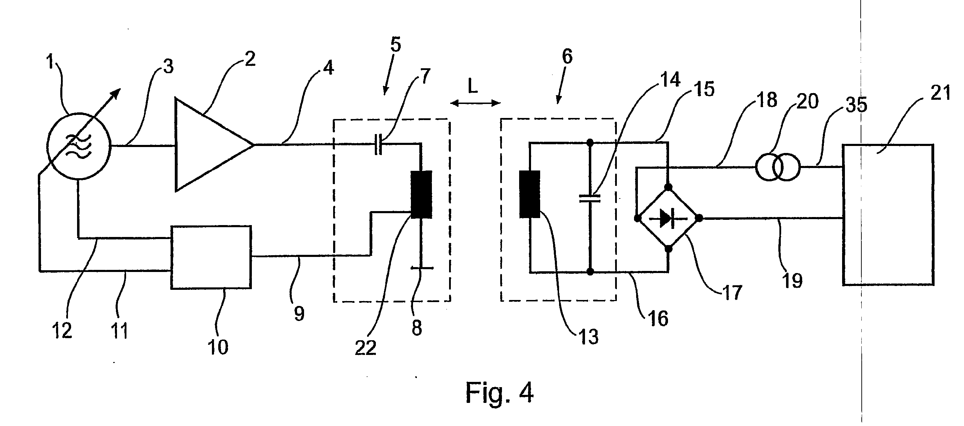

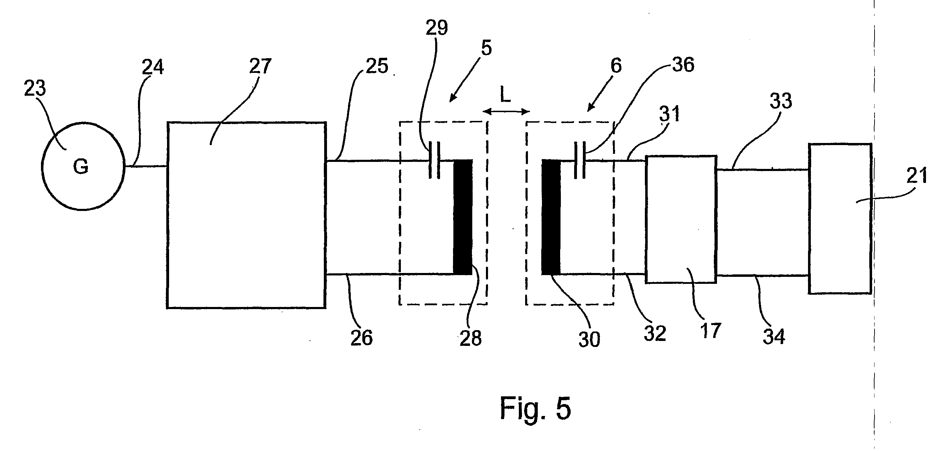

Wenden wir uns nun der Energieversorgung der Leuchtmittel 43 und des Akkus 21 zu, die in den Figuren 4 und 5 wiedergegeben wird.

Der Luftspalt L liegt somit zwischen einem Resonanzkreis auf der Senderseite 5 und einem Resonanzkreis auf der Empfängerseite 6. Der Resonanzkreis der Senderseite besteht aus einer Spule 22, die mit einem Kondensator 7 in Reihe geschaltet ist. Von einem Verstärker 2 wird über eine Verbindung 4 der Kondensator 7 und die Spule 22 gespeist. Der Verstärker 2 ist über eine Verbindung 3 mit einem variablen Oszillator 1 verbunden. Das dem Kondensator 7 gegenüberliegende Ende der Spule 22 ist geerdet (Bezugszeichen 8).

Um eine senderseitige Streuinduktivität kompensieren zu können, wird von der Spule 22 über eine Verbindung 9 eine Teilspannung abgegriffen. Diese Teilspannung wird einer Phasenregelschaltung 10 zugeführt. Über eine Verbindung 12 von dem Oszillator 1 wird die dem Verstärker 3 zugeführte Spannung ebenfalls zugeführt. Durch die Phasenregelschaltung 10 kann somit ein auftretender Koppelungseffekt durch die variable Koppelung kompensiert werden. Das daraus entstehende Regelsignal wird über eine Verbindung 11 dem Oszillator 1 zugeführt, der dadurch eine automatische Abstimmung des Oszillators 1 vornimmt.

Durch den Oszillator 1, der durch eine nicht dargestellte Versorgungsspannung von extern versorgt wird, wird die Senderseite 5 mit der entsprechenden Energie versorgt. Diese Energie überträgt sich über den Luftspalt L auf die Empfängerseite 6 der Energieübertragungseinrichtung. Die Emp-fängerseite 6 besteht ebenfalls aus einem Resonanzkreis, der aus einer Induktivität mit der Spule 13 und einem parallel dazu geschalteten Kondensator 14 besteht. Über Verbindungen 15 und 16 wird ein angeschlossener Gleichrichter 17 versorgt. Die gleichgerichtete Spannung geht über eine Verbindung 18 an eine Konstantstromquelle 20. Die Konstantstromquelle 20 sorgt dafür, dass über die Verbindungen 35 und 19 der angeschlossene Akku mit der entsprechenden Ladespannung versorgt wird. Dabei wird die Versorgungsspannung des Akkus ständig überwacht.

Bei der in Figur 5 dargestellten Ausführung einer kontaktlosen Energieübertragung handelt es sich, bei den auf der Senderseite 5 und auf der Empfängerseite 6 verwendeten Induktivitäten, um Spulen, die mit einem Ferritkern ausgerüstet sind.

Von einem Generator 23 wird über eine Verbindung 24 eine Verstärkungsschaltung 27 mit der notwendigen Energie für die Senderseite versorgt. Über eine Verbindung 25 wird dabei ein Kondensator 29, der in Reihe mit der Spule 28 liegt, verbunden, wobei andererseits die Spule 28 über eine Verbindung 26 mit dem Verstärker 27 verbunden ist.

Auch auf der Empfängerseite 6 ist die Spule 30 in Reihe mit einem Kondensator 36 geschaltet. Von dem Kondensator 36 geht über eine Verbindung 31 und über eine Verbindung 32 von dem anderen Spulenende 30 die von der Senderseite 6 empfangene Energie an einen Gleichrichter 17. Über die Verbindungen 33 und 34 wird die gleichgerichtete Spannung dem Akku 21 und dem Leuchtmittel 43 zugeführt.

Durch den relativ großen Luftspalt zwischen dem schwenkbaren Flügel 40 und dem Seitenteil 36 verringert sich die magnetische Koppelung. Gleichzeitig wird die Streuung vergrößert. Die Koppelung wird dabei durch die entsprechenden Ferritkerne verbessert. Die primären und sekundären Streuinduktivitäten werden dabei durch die Kondensatoren 29 und 36 kompensiert.

Die LED's 43 können mit einer zusätzlichen Schaltung versehen sein, die es ermöglicht, dass das von den Leuchtmitteln 43 ausgestrahlte Licht hinsichtlich seiner Anschaltdauer, seiner Helligkeit und/oder seiner farblichen Mischung variiert. Dabei können die Leuchtmittel 43 abhängig vom einfallenden Tageslicht, abhängig von einer anwesenden Person oder nach einem beliebigen anderen Programm gesteuert werden.

Bei einer Verwendung eines Akkus 21 kann die gesamte Beleuchtung 43 auch autark arbeiten. Es ist natürlich auch möglich, nur Teile der Leuchtmittel 43, z. B. die verschwenkbaren oder verfahrbaren Flügel, mit der notwendigen Energie zu versorgen. Der Akku 21 kann aber auch als Notbeleuchtung eingesetzt werden. Für einen Normalbetrieb reicht die Stromversorgung über vorbeschriebene Induktion aus.

### Bezugszeichenliste

- 1: variabler Oszillator
- 2: Verstärker
- 3: Verbindung
- 4: Verbindung
- 5: Senderseite
- 6: Empfängerseite
- 7: Kondensator
- 8: Masse
- 9: Verbindung
- 10: Phasenvergleichsschaltung
- 11: Verbindung
- 12: Verbindung
- 13: Spule
- 14: Kondensator
- 15: Verbindung
- 16: Verbindung
- 17: Gleichrichter
- 18: Verbindung
- 19: Verbindung
- 20: Konstantstromquelle
- 21: Akku
- 22: Spule
- 23: Generator
- 24: Verbindung
- 25: Verbindung
- 26: Verbindung
- 27: Verstärker
- 28: Spule
- 29: Kondensator
- 30: Spule
- 31: Verbindung
- 32: Verbindung
- 33: Verbindung
- 34: Verbindung
- 35: Verbindung
- 36: Seitenteil
- 37: Wand
- 38: Duschtasse
- 39: unteres Profil
- 40: schwenkbarer Flügel
- 41: Dichtlippe
- 42: Kabel
- 43: LED

## Patentansprüche

1. Duschabtrennung, bestehend aus wenigstens einem plattenförmigen Element (36, 40), wobei die plattenförmigen Elemente (36, 40) im Randbereich ganz oder teilweise mit Profilen ausgestattet sind, in/an denen ein Leuchtmittel (43) enthalten ist, wobei die elektrische Energie zur Versorgung des Leuchtmittels (43) netzunabhängig durch einen Akku (21) aufrechterhalten wird, **dadurch gekennzeichnet, dass** der Akku (21) in den Profilen oder in Dichtungen an den plattenförmigen Elementen (36, 40) und/oder unterhalb der plattenförmigen Elemente (36, 40) der Duschabtrennung platziert ist.

2. Duschabtrennung nach Anspruch 1, **dadurch gekennzeichnet, dass** die plattenförmigen Elemente (36, 40) zumindest einen beweglichen Flügel (40) enthält und dass der Akku (21) innerhalb dieser beweglichen Flügel (40) der Duschabtrennung integriert ist.

3. Verfahren zur kontaktlosen Energieübertragung für ein Leuchtmittel (43), und einen Akku (21) innerhalb von Randprofilen order -dichtungen der plattenförmigen Elemente (36, 40) einer Duschabtrennung gemäß den vorhergehenden Ansprüchen, das eine speisende Induktionsspule (22, 28) durch Induktion auf eine gespeiste Induktionsspule (13, 30) die Energie für das Leuchtmittel (43) und die Ladung des Akku (21) überträgt, indem die Energieübertragung von einer Senderseite (5) auf eine Empfängerseite (6) über einen auf der Senderseite (5) und einen auf der Empfängerseite (6) vorhandenen Resonanzkreis erfolgt.

4. Verfahren zur kontaktlosen Energieübertragung nach Anspruch 3, **dadurch gekennzeichnet, dass** die Koppelung des Resonanzkreises variabel ist und entsprechende Koppeleffekte automatisch kompensiert werden.

5. Verfahren zur kontaktlosen Energieübertragung nach Anspruch 3 oder 4, **dadurch gekennzeichnet, dass** ein Oszillator (1) mit einer Phasenregelschaltung (10) und einem nachgeschalteten Verstärker (2) zur Versorgung des senderseitigen Resonanzkreises (5) eingesetzt wird.

6. Verfahren zur kontaktlosen Energieübertragung nach einem der vorhergehenden Ansprüche 3 bis 5, **dadurch gekennzeichnet, dass** die Koppelung zwischen der Senderseite (5) und der Empfängerseite (6) variabel ist.

7. Verfahren zur kontaktlosen Energieübertragung nach einem der vorhergehenden Ansprüche 3 bis 6, **dadurch gekennzeichnet, dass** die Koppeleffekte durch einen Phasenvergleich kompensiert werden.

8. Verfahren zur kontaktlosen Energieübertragung nach einem der vorhergehenden Ansprüche 3 bis 7, **dadurch gekennzeichnet, dass** zur Durchführung des Phasenvergleiches die Phasenregelschaltung (10) verwendet wird.

9. Verfahren zur kontaktlosen Energieübertragung nach einem der vorhergehenden Ansprüche 3 bis 8, **dadurch gekennzeichnet, dass** auf der Empfängerseite (6) eine Gleichrichterschaltung (17) mit einer nachgeschalteten Konstantstromquelle (20) vorhanden ist.

10. Verfahren zur kontaktlosen Energieübertragung nach einem der vorhergehenden Ansprüche 3 bis 9, **dadurch gekennzeichnet, dass** die Induktivitäten (22, 13, 30) auf der Senderseite (5) und der Empfängerseite (6) Luftinduktivitäten sind.

11. Verfahren zur kontaktlosen Energieübertragung nach einem der vorhergehenden Ansprüche 3 bis 10, **dadurch gekennzeichnet, dass** die Induktivitäten (22, 13, 30) auf der Senderseite (5) und auf der Empfängersei-te (6) mit einem Ferritkern versehen sind.

12. Verfahren zur kontaktlosen Energieübertragung nach Anspruch 1, **dadurch gekennzeichnet, dass** die Versorgungsspannung des Akkus (21) überwacht wird.

## Claims

1. A shower partitioning, consisting of at least one plate-shaped element (36, 40), wherein the plate-shaped elements (36, 40), in the border area, are completely or partially equipped with profiles, in/at which illumination means (43) are contained, wherein the electrical energy for supplying the illumination means (43) is maintained mains independently through an accumulator (21), **characterized in that** the accumulator (21) is placed in the profiles or in seals at the plate-shaped elements (36, 40) and/or below the plate-shaped elements (36, 40) of the shower partitioning.

2. A shower partitioning according to claim 1, **characterized in that** the plate-shaped elements (36, 40) include at least one mobile leaf (40) and **in that** the accumulator (21) is integral within these mobile leaves (40) of the shower partitioning.

3. A method for contactless energy transmission for an illumination means (43) and an accumulator (21) within border profiles or border seals of the plate-shaped elements (36, 40) of a shower partitioning according to the preceding claims, in that a feeding induction coil (22, 28) transfers the energy for the illumination means (43) and for charging the accumulator (21) via induction to a fed induction coil (13, 30) by realizing the energy transmission from a transmitter side (5) to a receiver side (6) via a resonance circuit, one provided on the transmitter side (5) and one on the receiver side (6).

4. A method for contactless energy transmission according to claim 3, **characterized in that** the coupling of the resonance circuit is variable and **in that** respective coupling effects are automatically compensated for.

5. A method for contactless energy transmission according to claim 3 or 4, **characterized in that** an oscillator (1) with a phase regulation circuit (10) and a downstream amplifier (2) are employed to supply the resonance circuit on the transmitter side (5).

6. A method for contactless energy transmission according to one of the preceding claims 3 to 5, **characterized in that** the coupling between the transmitter side (5) and the receiver side (6) is variable.

7. A method for contactless energy transmission according to one of the preceding claims 3 to 6, **characterized in that** the coupling effects are compensated for through a phase comparison.

8. A method for contactless energy transmission according to one of the preceding claims 3 to 7, **characterized in that** the phase regulation circuit (10) is used for performing the phase comparison.

9. A method for contactless energy transmission according to one of the preceding claims 3 to 8, **characterized in that** a rectifier circuit (17) with a downstream constant-current source (20) is provided on the receiver side (6).

10. A method for contactless energy transmission according to one of the preceding claims 3 to 9, **characterized in that** the inductors (22, 13, 30) on the transmitter side (5) and on the receiver side (6) are air-cored inductors.

11. A method for contactless energy transmission according to one of the preceding claims 3 to 10, **characterized in that** the inductors (22, 13, 30) on the transmitter side (5) and on the receiver side (6) are provided with a ferrite core.

12. A method for contactless energy transmission according to claim 1, **characterized in that** the supply voltage of the accumulator (21) is monitored.

## Revendications

1. Cloison de séparation pour douche, composée au moins d'un élément (36, 40) en forme de plaque, les éléments (36, 40) en forme de plaque, dans leur régions de bord, étant entièrement ou partiellement équipés de profilés, dans/sur lesquels un moyen d'illumination (43) est inclus, l'énergie électrique pour alimenter le moyen d'illumination (43) étant maintenue par un accumulateur (21) indépendamment du réseau de courant, **caractérisée en ce que** l'accumulateur (21) est placé dans les profilés ou dans des joints sur les éléments (36, 40) en forme de plaque et/ou en dessous des éléments (36, 40) en forme de plaque de la cloison de séparation pour douche.

2. Cloison de séparation pour douche selon la revendication 1, **caractérisée en ce que** les éléments (36, 40) en forme de plaque contiennent au moins un vantail mobile (40) et **en ce que** l'accumulateur (21) est intégré à l'intérieur de ces vantaux mobiles (40) de la cloison de séparation pour douche.

3. Procédé pour le transfert d'énergie sans contacts pour un moyen d'illumination (43) et un accumulateur (21) à l'intérieur de profilés de bord ou de joints de bord des éléments (36, 40) en forme de plaque d'une cloison de séparation pour douche selon les revendications précédentes, en ce qu'une bobine d'induction alimentant (22, 28) transfère l'énergie pour le moyen d'illumination (43) et pour la charge de l'accumulateur (21) par induction vers une bobine d'induction alimentée (13, 30), en effectuant le transfert d'énergie d'un côté émetteur (5) vers un côté récepteur (6) via un circuit de résonance prévu du côté émetteur (5) et un autre du côté récepteur (6).

4. Procédé pour le transfert d'énergie sans contacts selon la revendication 3, **caractérisé en ce que** le couplage des circuits de résonance est variable et **en ce que** des effets de couplage correspondants sont compensés automatiquement.

5. Procédé pour le transfert d'énergie sans contacts selon la revendication 3 ou 4, **caractérisé en ce qu'**un oscillateur (1) est employé avec un circuit de réglage de phases (10) et avec un amplificateur aval (2) pour l'alimentation du circuit de résonance du côté émetteur (5).

6. Procédé pour le transfert d'énergie sans contacts selon l'une des revendications précédentes 3 à 5, **caractérisé en ce que** le couplage entre le côté émetteur (5) et le côté récepteur (6) est variable.

7. Procédé pour le transfert d'énergie sans contacts selon l'une des revendications précédentes 3 à 6, **caractérisé en ce que** les effets de couplage sont compensés par une comparaison de phases.

8. Procédé pour le transfert d'énergie sans contacts selon l'une des revendications précédentes 3 à 7, **caractérisé en ce que** le circuit de réglage de phases (10) est utilisé pour l'exécution de la comparaison de phases.

9. Procédé pour le transfert d'énergie sans contacts selon l'une des revendications précédentes 3 à 8, **caractérisé en ce qu'**un circuit redresseur (17) avec en aval une source de courant à intensité constante (20) est prévu du côté récepteur (6).

10. Procédé pour le transfert d'énergie sans contacts selon l'une des revendications précédentes 3 à 9, **caractérisé en ce que** les inductivités (22, 13, 30) du côté émetteur (5) et du côté récepteur (6) sont des inductivités à noyau en air.

11. Procédé pour le transfert d'énergie sans contacts selon l'une des revendications précédentes 3 à 10, **caractérisé en ce que** les inductivités (22, 13, 30) du côté émetteur (5) et du côté récepteur (6) sont des inductivités à tore de ferrite.

12. Procédé pour le transfert d'énergie sans contacts selon la revendication 1, **caractérisé en ce que** la tension d'alimentation de l'accumulateur (21) est surveillée.
